# EUROPÄISCHE PATENTSCHRIFT

(11) **EP 2 397 252 B1**
(45) Veröffentlichungstag und Bekanntmachung des Hinweises auf die Patenterteilung: **26.09.2012**
(21) Anmeldenummer: 10166287.2
(22) Anmeldetag: 17.06.2010
(51) Int. Cl.: B23Q 7/14, B23Q 1/66, B65G 15/12

(54) **Bearbeitungsmaschine**
Machining unit
Machine de traitement

(43) Veröffentlichungstag der Anmeldung: 21.12.2011
(73) Patentinhaber: Homag Holzbearbeitungssysteme AG, 72296 Schopfloch (DE)
(72) Erfinder: Schmieder, Volker, 72116 Mössingen (DE); Sturm, Christian, 72172 Sulz (DE)
(74) Vertreter: HOFFMANN EITLE

(56) Entgegenhaltungen:
- EP-A2- 0 132 409
- DE-A1- 3 734 908
- US-A- 4 014 428

## Beschreibung

### Technisches Gebiet

Die vorliegende Erfindung bezieht sich auf eine Bearbeitungsmaschine zum Bearbeiten von stabförmigen, plattenförmigen oder dreidimensional geformten Werkstücken, die bevorzugt zumindest abschnittsweise aus Holz, aus Kunststoff oder dergleichen bestehen.

### Stand der Technik

Zum Bearbeiten werden die Werkstücke mittels einer geeigneten Aufspanntechnik auf einen Bearbeitungstisch der Bearbeitungsmaschine aufgespannt. Das Werkstück wird dabei vor dem Aufspannen genau ausgerichtet, um bei der Bearbeitung eine gewünschte Geometrie zu erzielen. Die genaue Ausrichtung ist besonders dann wichtig, wenn aus Kosten- oder verfahrenstechnischen Gründen auf eine Konturerfassung beispielsweise mittels eines optischen Konturerfassungssystems verzichtet wird. Lageabweichungen in der Aufspannung wirken sich damit direkt auf die Geometrie des Arbeitsergebnzsses aus. Gleichzeitig soll die Aufspannung des Werkstücks jedoch schnell erfolgen, um die Maschinenstillstandszeiten möglichst kurz zu halten. Der genauen, schnellen und stabilen Befestigung des Werkstücks auf dem Bearbeitungstisch mittels der Aufspanntechnik kommt somit eine große Bedeutung zu. Die Aufspanntechnik soll dabei nicht nur eine schnelle Positionsausrichtung ermöglichen, sondern auch die beim gewählten Bearbeitungsverfahren auftretenden Bearbeitungskräfte aufnehmen. Die Aufspanntechnik ist ferner vom Material und der Oberflächenbeschaffenheit bzw. Oberflächengeometrie des zu bearbeitenden Werkstücks abhängig. Es hat sich daher gezeigt, dass die Verfahrenseffizienz durch die Auswahl einer auf die Werkstückgeometrie und den Bearbeitungswunsch ausgerichteten Aufspanntechnik gesteigert werden kann. Gleichzeitig besteht ein Trend dahingehend, dass durch kurze Bearbeitungszeiten, vielen Praduktvarianten am Markt und flexibel zu programmierenden CNC-Bearbeitungszentren Produktwechsel, d.h. Wechsel der Geometrie des zu bearbeitenden Werkstücks, in ihrer Häufigkeit zunehmen. Es besteht daher der Wunsch, eine Bearbeitungsmaschine schnell und mit wenig Aufwand auf eine neue Aufspanntechnik umzurüsten. Gleichzeitig möchte man zusätzliche kostenintensive Hebehilfen oder ein manuelles zeitaufwändiges Tragen der Werkstückträger minimieren.

### Darstellung der Erfindung

Der Erfindung liegt daher die Aufgabe zugrunde, eine Bearbeitungsmaschine zum Bearbeiten von stabförmigen, plattenförmigen oder dreidimensional geformten Werkstücken, die bevorzugt zumindest abschnittsweise aus Holz, aus Kunststoff oder dergleichen bestehen, zur Verfügung zu stellen, die ein schnelles und störungsfreies Umrüsten auf eine neue Aufspanntechnik ermöglicht.

Diese Aufgabe wird durch eine Bearbeitungsmaschine nach dem unabhängigen Anspruch 1 und ein Verfahren zum Werkstückdurchlauf durch eine Bearbeitungsmaschine nach dem unabhängigen auf ein Verfahren gerichteten Anspruch gelöst. Weitere vorteilhafte Ausführungsformen sind in den Unteransprüchen beschrieben.

Die erfindungsgemäße Bearbeitungsmaschine weist wenigstens eine Bearbeitungseinheit zum Bearbeiten von Werkstücken in einem Bearbeitungsbereich auf. Die Bearbeitung der Werkstücke erfolgt somit im Bearbeitungsbereich. Zum Bearbeiten werden die Werkstücke in den Bearbeitungsbereich transportiert und nach der Bearbeitung aus dem Bearbeitungsbereich abgeführt. Erfindungsgemäß ist ein erster Bearbeitungstisch vorgesehen, um die Werkstücke aufzunehmen. Ferner sind erste Spannmittel vorgesehen, um die Werkstücke an dem ersten Bearbeitungstisch zu fixieren. Die ersten Spannmittel sind dabei bevorzugt am ersten Bearbeitungstisch vorgesehen. Besonders bevorzugt sind die Spannmittel als pneumatische Spannelemente ausgeführt. Dabei werden Spannbacken, die das Werkstück mechanisch klemmen, mittels über pneumatische Druckleitungen zugeführter Druckluft betätigt. Bevorzugt können die ersten Spannmittel auch hydraulisch oder elektromechanisch betätigt sein.

Erfindungsgemäß ist wenigstens ein Werkstückträger zum Aufnehmen der Werkstücke vorgesehen, der Werkstückspannmittel zum Fixieren der Werkstücke an dem Werkstückträger aufweist. Der Werkstückträger ist somit ebenfalls eingerichtet, die Werkstücke aufzunehmen. Der Werkstückträger weist zusätzliche Werkstückspannmittel auf, die dazu dienen, die Werkstücke bevorzugt auf dem Werkstückträger zu befestigen. Bevorzugt sind mehrere Werkstückträger vorgesehen, die jeweils Werkstückspannmittel aufweisen. Dadurch ist es möglich, die einzelnen Werkstückträger auch in der Maschine jeweils mit Werkstücken zu bestücken und diese dann der Bearbeitung zuzuführen. Dadurch können die Vorgänge von einem Aufspannen der Werkstücke und dem Bearbeiten der Werkstücke parallelisiert werden. Während dabei noch Werkstücke auf den Werkstückträgern befestigt werden, können andere Werkstücke, die sich schon auf den Werkstückträgern befinden, bearbeitet werden. Dadurch können die Stillstandszeiten der Maschine, die durch das Aufbringen und befestigen der Werkstücke auf dem Bearbeitungstisch bedingt sind, verkürzt werden.

Erfindungsgemäß weist der erste Bearbeitungstisch eine Führungseinrichtung auf, die die Werkstückträger mittels an den Werkstückträgern vorgesehenen Führungsmitteln führend aufnehmen kann, so dass sie zwischen einer Arbeitsposition im Bearbeitungsbereich auf dem Bearbeitungstisch und einer Ruheposition außerhalb des Bearbeitungsbereichs bewegbar sind. Der genannte Vorteil einer parallelen Bearbeitung von Werkstücken, während andere Werkstücke noch auf die Werkstückträger aufgebracht und daran befestigt werden, greift dann besonders, wenn die Werkstückträger mit den darauf befestigten Werkstücken schneller auf den Bearbeitungstisch aufgebracht und darauf positioniert werden können, als dies mit den Werkstücken alleine möglich ist. So weist der ersten Bearbeitungstisch eine Führungseinrichtung auf, die mittels den an den Werkstückträgern vorgesehenen Führungsmitteln ein schnelles und lagegenaues Zuführen der Werkstückträgern mit den darauf befindlichen Werkstücken in eine Arbeitsposition im Bearbeitungsbereich auf dem Bearbeitungstisch der Bearbeitungsmaschine ermöglicht. Nach der Bearbeitung können die Werkstückträger dann schnell aus dem Bearbeitungsbereich in eine Ruheposition außerhalb des Bearbeitungsbereichs verfahren werden. Insgesamt können dadurch die Stillstandszeiten der Bearbeitungsmaschine, die durch das Zuführen und Aufspannen der Werkstücke auf dem Bearbeitungstisch bedingt sind, verringert werden.

Ein noch wesentlicherer Vorteil der erfindungsgemäßen Bearbeitungsmaschine liegt jedoch darin, dass auf dem Bearbeitungstisch der Bearbeitungsmaschine zügig und störungsfrei unterschiedliche Werkstückträger eingesetzt werden können. Beispielsweise können Werkstückträger mit ganz spezifischen Merkstückspannmitteln angepasst an die zu bearbeitenden Werkstücke und die Bearbeitungsaufgabe eingesetzt werden. So können die Werkstückspannmittel der Werkstückträger beispielsweise bevorzugt als Vakuumspannelemente ausgeführt sein. Damit lässt sich eine besonders gute flächige Aufspannung von plattenförmigen Werkstücken erzielen. Der Bearbeitungstisch hingegen kann einfacher gestaltet werden, da komplizierte Werkstückspannmittel an den Werkstückträgern vorgesehen werden können. Ferner werden dadurch die Umrüstzeiten der Bearbeitungsmaschine gesenkt. Im Idealfall beschränkt sich die Umrüstung hinsichtlich der Werkstückaufspannung auf die Verwendung werkstückspezifischer Werkstückträger. Lange Stillstandszeiten durch die Realisierung einer werkstückspezifischen Spanntechnik am Bearbeitungstisch entfallen. Ein besonderer Vorteil der erfindungsgemäßen Bearbeitungsmaschine liegt darin, dass ein manuelles Tragen der Werkstückträger durch deren Verfahrbarkeit minimiert ist und auch zusätzliche kostenintensive Hebehilfen für die Werkstückträger eingespart werden können.

Gemäß einer bevorzugten Ausführungsform sind die Spannmittel eingerichtet, die Werkstückträger am Bearbeitungstisch zu fixieren. Dadurch, dass die Spannmittel, die vorgesehen sind, die Werkstücke am Bearbeitungstisch zu fixieren, dazu eingerichtet sind wahlweise auch die Werkstückträger am Bearbeitungstisch zu fixieren, müssen zur Fixierung der Werkstückträger am Bearbeitungstisch keine Zusätzlichen gesonderten Spannmittel vorgesehen werden. Dadurch kann der Aufbau vereinfacht und in den Kosten optimiert werden. Erfindungsgemäß können auch Trägerspannmittel am Bearbeitungstisch vorgesehen werden, die eingerichtet sind, die Werkstückträger am Bearbeitungstisch zu fixieren. Diese Trägerspannmittel können dann spezifisch für ihre Aufgabe, nämlich das Halten der Werkstückträger, gestaltet werden. Eine Flexibilisierung hinsichtlich unterschiedlicher Produkt- bzw. Werkstückgeometrien ist bei den Trägerspannmitteln nicht erforderlich, so dass diese einfach ausgeführt und kostengünstig realisiert werden können.

Gemäß einer bevorzugten Ausführungsform der vorliegenden Erfindung ist die Führungseinrichtung als Linearführung ausgeführt. Die Linearführung ermöglicht ein kinematisch einfaches, im Wesentlichen geradliniges, Einschieben der Werkstückträger mit den Werkstücken in den Bearbeitungsbereich. Es ist aber auch im Sinne der Erfindung, dass für die Führungseinrichtung bahnförmige Führungen, z.B. in Form von Kreisbögen oder dergleichen verwendet werden. Gemäß einer bevorzugten Ausführungsform der vorliegenden Erfindung ist wenigstens ein zweiter Bearbeitungstisch zum Aufnehmen von Werkstücken an der Bearbeitungsmaschine vorgesehen, der eine Führungseinrichtung aufweist, die die Werkstückträger mittels an den Werkstückträgern vorgesehenen Führungsmitteln führend aufnehmen kann. Die Bearbeitung der Werkstücke kann dann auf beiden Werkstückträgern gleichzeitig oder im Wechsel erfolgen.

Gemäß einer bevorzugten Ausführungsform der vorliegenden Erfindung sind die Werkstückträger besonders bevorzugt von mindestens zwei Bearbeitungstischen gleichzeitig führend aufnehmbar. Bei dieser Ausführungsform kommen somit Werkstückträger zum Einsatz, die sich über beide Bearbeitungstische erstrecken. Dadurch können besonders große Werkstücke aufgespannt werden, die sich bevorzugt über beide Bearbeitungstische erstrecken. Die Werkstückträger werden dabei von den Führungseinrichtungen des ersten bzw. zweiten Bearbeitungstischs geführt und gehalten. Bevorzugt sind die Bearbeitungstische dazu miteinander gekoppelt synchron bewegbar, wenn ein Werkstückträger sich über beide Bearbeitungstische erstreckend angeordnet ist. Die beiden Bearbeitungstische werden durch den über beide Bearbeitungstische verlaufenden Werkstückträger zur Bearbeitung von besonders großen Werkstücken nutzbar. Dadurch kann das Einsatzspektrum der erfindungsgemäßen Bearbeitungsmaschine erweitert werden. Dabei kann ein Umrüsten für besonders große Werkstücke relativ schnell erfolgen, indem die Bearbeitungstische mit den Werkstückträgern versehen werden. Auch hierbei ist es wieder möglich, Werkstückträger zur Bearbeitung vorzubereiten, in dem die Werkstücke auf die Werkstückträger aufgespannt werden, um dann durch Einsetzen in die Führungseinrichtung und Verfahren in den Bearbeitungsbereich der Bearbeitung zugeführt zu werden.

Gemäß einer besonders bevorzugten Ausführungsform ist ein Werkstückträgermagazin vorgesehen, das wenigstens einen Werkstückträger aufnehmen kann.

Bevorzugt ist das Werkstückträgermagazin eingerichtet, mehrere Werkstückträger aufnehmen zu können. Dadurch können mehrere, z.B. schon mit Werkstücken bestückte Werkstückträger, beispielsweise in direkter Nähe von dem Bearbeitungstisch der Bearbeitungsmaschine angeordnet werden. Es ist dadurch möglich, die Maschine sehr schnell mit Werkstücken zu beschicken. Ferner erfüllt das Werkstückträgermagazin eine Pufferfunktion und kann Engpässen in der Werkstückzuführung zur Bearbeitungsmaschine vorbeugen. Bevorzugt weist das Werkstückträgermagazin wenigstens eine Führungseinrichtung auf, die den Werkstückträger mittels dem an dem Werkstückträger vorgesehenen Führungsmittel führend aufnehmen kann.

Da der Werkstückträger ohnehin mit Führungsmitteln versehen ist, stellt die Verwendung dieser Führungsmittel zur Aufnahme der Werkstückträger im Werkstückträgermagazin eine technisch einfach zu realisierende Lösung dar. Wird ferner die Führungseinrichtung am Werkstückträgermagazin fluchtend mit der Führungseinrichtung am Bearbeitungstisch in Deckung gebracht, kann der Werkstückträger direkt und einfach vom Werkstückträgermagazin auf den Bearbeitungstisch geschoben werden. Weitere Handhabungs- oder Ausrichtvorgänge können damit entfallen.

Bevorzugt ist dazu die jeweilige Führungseinrichtung des Werkstückträgermagazins so fluchtend mit der Führungseinrichtung am Bearbeitungstisch in eine Übergabestellung ausrichtbar, dass der Werkstückträger direkt, insbesondere linear vom Führungseingriff mit der Führungseinrichtung am Werkstückträgermagazin in den Führungseingriff mit der Führungseinrichtung am Bearbeitungstisch verlagerbar ist. Im Falle von mehreren übereinander angeordneten Führungseinrichtungen zur Aufnahme von mehreren Werkstückträgern übereinander sind die Führungseinrichtungen bevorzugt so vertikal verlagerbar, dass sie fluchtend mit der Führungseinrichtung am Bearbeitungstisch in eine Übergabestellung ausrichtbar sind. Bevorzugt können die Führungseinrichtungen auch in andere Richtungen relativ zur Führungseinrichtung am Bearbeitungstisch verlagert werden. Beispielsweise kann das Ausrichten in die Übergabestellung auch durch kombiniertes vertikales und horizontales Verfahren oder auch durch Schwenkbewegungen der Führungseinrichtung erfolgen.

Erfindungsgemäß lassen sich Werkstückträger mit den unterschiedlichsten Aufspannsystemen auf den Bearbeitungstischen entlang der Führungseinrichtung verlagerbar anordnen. Damit ist es möglich, eine spezifisch auf die Bearbeitungsaufgabe, die Werkstückbeschaffenheit und Werkstückgeometrie angepasste Aufspanntechnik in der Bearbeitungsmaschine einzusetzen. Den aufgrund der hohen Variantenvielfalt häufig zu erfolgenden Produktwechseln kann durch die einfache und schnelle Konfiguration von Werkstückträgern begegnet werden. Insgesamt lassen sich auf der erfindungsgemäßen Bearbeitungsmaschine somit auch bei häufigen Produktwechseln besonders kurze Stillstandszeiten erreichen.

Ein erfindungsgemäßes Verfahren ist in Anspruch 13 definiert. Dieses ermöglicht im wesentlichen dieselben Vorteile wie die erfindungsgemäße Vorrichtung.

Bei dem erfindungsgemäßen Verfahren können die Werkstück vorteilhaft in der Arbeitsposition des Werkstückträgers auf diesen aufgelegt und anschließend bearbeitet werden. Gemäß einer Weiterbildung der Erfindung ist jedoch vorgesehen, dass das Werkstück bereits in der Ruheposition des Werkstückträgers auf diesen aufgelegt wird. Hierdurch können kostenintensive Hebehilfen bzw. ein manuelles Tragen der Werkstückträger eingespart werden.

Die US 4,014,428 offenbart die Merkmale des Oberbegriffs von Anspruch 1.

Die EP 0 132 409 A2 offenbart einen Arbeitspalettenwechsler, welcher eine Arbeitspalette wechselt, die auf einer Palettenbefestigungseinrichtung an einem Tisch einer Werkzeugmaschine befestigt ist, umfassend bewegbare Montierteile, die an einem drehbaren Träger angeordnet sind, welche um eine horizontale Achse drehbar ist, so dass ein Transfer einer Arbeitspalette zwischen einem Palettenmontierteil und der Palettenbefestigungseinrichtung ermöglicht wird.

### Kurze Beschreibung der Zeichnungen

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Draufsicht einer erfindungsgemäßen Bearbeitungsmaschine gemäß einem ersten Ausführungsbeispiel in einem Zustand, in dem sich Werkstückträger noch auf einem Werkstückträgermagazin befinden;
- Fig. 2: die Bearbeitungsmaschine gemäß dem Ausführungsbeispiel von Fig. 1 in einem Zustand, in dem ein Werkstückträger vom Werkstückträgermagazin auf den Bearbeitungstischen angeordnet ist; und
- Fig. 3: die Bearbeitungsmaschine aus den Fig. 1 und 2 in einem Zustand, in dem mehrere Werkstückträger auf den Bearbeitungstischen angeordnet sind mit einem zur Bearbeitung aufgespannten Werkstück.

In den Figuren bezeichnen dieselben Bezugszeichen gleiche oder funktionsgleiche Komponenten, soweit nichts Gegenteiliges Angegeben ist.

### Ausführliche Beschreibung der bevorzugten Ausführungsformen

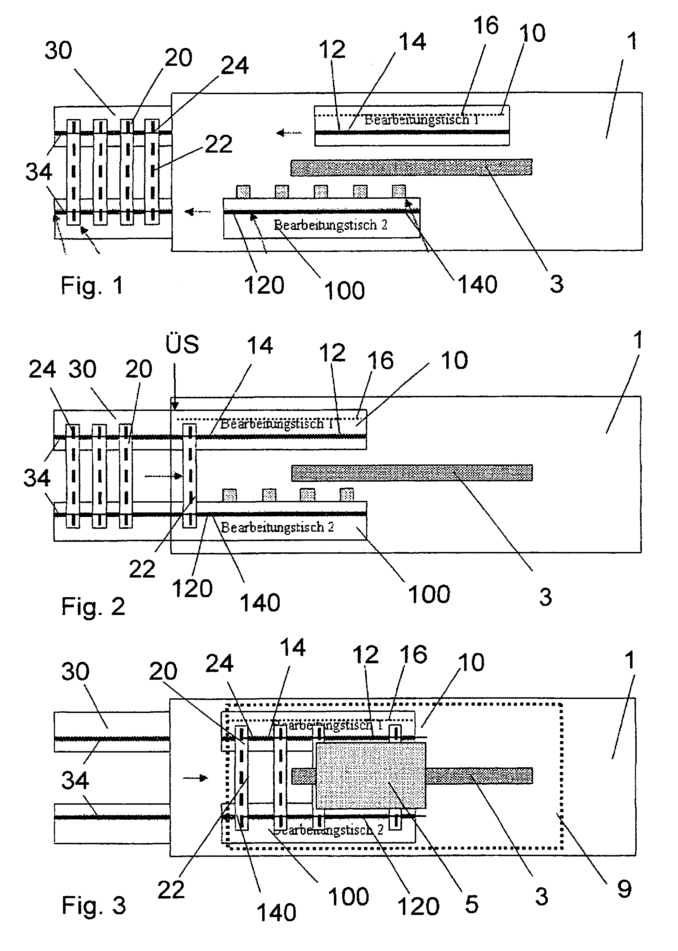

Fig. 1 zeigt eine schematische Draufsicht einer erfindungsgemäßen Bearbeitungsmaschine 1 gemäß einem ersten Ausführungsbeispiel in einem Zustand, in dem sich Werkstückträger 20 noch auf einem Werkstückträgermagazin 30 befinden. Eine Bearbeitungsmaschine 1 ist als Rechteck dargestellt. Die Bearbeitungsmaschine 1 weist einen ersten Bearbeitungstisch 10 und einen zweiten Bearbeitungstisch 100 auf, die im Bild parallel zueinander, horizontal verlaufend dargestellt sind.

Die Bearbeitungstische 10, 100 weisen jeweils Spannmittel 12, 120 zum Aufspannen von Werkstücken auf die Bearbeitungstische 10, 100 auf. Die Bearbeitungstische 10, 100 sind gemäß diesem Ausführungsbeispiel in ihrer Längserstreckungsrichtung, im Bild demnach horizontal, verschiebbar angeordnet. An der Bearbeitungsmaschine 1 ist bei diesem Ausführungsbeispiel kopfseitig ein Werkstückträgermagazin 30 vorgesehen, auf dem Werkstückträger 20 linear verschiebbar angeordnet sind. Dazu ist dem Werkstückträgermagazin 30 eine Führungseinrichtung 34 vorgesehen, die mit Führungsmitteln 24 an den Werkstückträgern 20 zusammenwirkt. Die Führungseinrichtung 34 ermöglicht es zusammen mit den Führungsmitteln 24, dass die Werkstückträger 20 am Werkstückträgermagazin 30 verschiebbar gelagert sind.

An den Bearbeitungstischen 10, 100 sind jeweils eine Führungseinrichtung 14, 140 vorgesehen, in die die Führungsmittel 24 an den Werkstückträgern 20 ebenfalls führend eingreifen können. Damit sind die Werkstückträger 20 sowohl auf dem Werkstückträgermagazin 30 als auch auf den Bearbeitungstischen 10, 100 geführt lagerbar. An den Bearbeitungstischen 10, 100 sind erste Spannmittel 12 bzw. 120 vorgesehen. Mit diesen Spannmitteln 12, 120 können Werkstücke 5 auf die Bearbeitungstische 10, 100 gespannt werden. Bei diesem Ausführungsbeispiel ist es jedoch auch möglich, das mittels der Spannmittel 12, 120 Werkstückträger 20 an den Bearbeitungstischen 10, 100 fixiert werden.

Ferner sind bei diesem Ausführungsbeispiel am ersten Bearbeitungstisch 10 gestrichelt dargestellte Trägerspannmittel 16 vorgesehen, mit denen die Werkstückträger 20 am ersten Bearbeitungstisch 10 fixiert werden können. Am zweiten Bearbeitungstisch können erfindungsgemäß ebensolche Trägerspannmittel 16 vorgesehen werden. Die Werkstückträger 20 weisen Werkstückspannmittel 22 auf, die hier als Vakuumspannelemente ausgeführt sind, und ein Aufspannen von Werkstücken auf die Werkstückträger 20 ermöglichen. Die Werkstücke lassen sich somit sowohl auf die Werkstückträger 20 als auch direkt auf die Bearbeitungstische 10, 100 aufspannen. Die Werkstückträger 20 bieten hierbei jedoch die Möglichkeit die Werkstücke mittels Vakuumspanntechnik aufzuspannen. Aus Übersichtsgründen wurde das Werkstück 5 in Figur 1 nicht dargestellt, ist jedoch hinsichtlich seiner Positionierung aus Fig. 3 entnehmbar.

Fig. 2 zeigt die Bearbeitungsmaschine 1 gemäß dem Ausführungsbeispiel von Fig. 1 in einem Zustand, in dem ein Werkstückträger 20 vom Werkstückträgermagazin 30 auf den Bearbeitungstischen 10, 100 angeordnet ist. Die Elemente aus Fig. 2 entsprechen vom Prinzip her denen aus Fig. 1, die Bearbeitungsmaschine 1 befindet sich jedoch in einem anderen Zustand. Die beiden Bearbeitungstische 10, 100 befinden sich in einer Übergabestellung ÜS. In der Übergabestellung ÜS ist die Führungseinrichtung 34 des Werkstückträgermagazins 30 fluchtend mit den Führungseinrichtungen 14, 140 an den Bearbeitungstischen 10, 100 ausgerichtet. Dadurch konnte ein Werkstückträger 20 vom Werkstückträgermagazin 30 auf die Bearbeitungstische 10, 100 herübergeschoben werden.

Fig. 3 zeigt die Bearbeitungsmaschine aus den Fig. 1 und 2 in einem Zustand, in dem mehrere Werkstückträger 20 auf den Bearbeitungstischen 10, 100 angeordnet sind mit einem zur

Bearbeitung aufgespannten Werkstück 5. In Fig. 3 sind mehrere Werkstückträger 20 auf den Bearbeitungstischen 10, 100 angeordnet. Die Bearbeitungstische 10, 100 wurden mit einem auf den Werkstückträgern 20 mittels der Werkstückspannmittel 22 befestigten Werkstück 5 in den Bearbeitungsbereich 9 der Bearbeitungseinheit 3 verfahren. Hier kann nun die Bearbeitung des Werkstücks 5 erfolgen. Die Bearbeitungstische 10, 100 lassen sich zur Verlagerung des Werkstücks 5 synchron bewegen. Die erfindungsgemäße Bearbeitungsmaschine 1 lässt sich somit flexibel mit unterschiedlichsten Werkstückträgern 20 bestücken, wodurch auf einer von der Struktur her unveränderten Bearbeitungsmaschine 1 mittels der Werkstückträger 20 unterschiedliche Aufspanntechniken eingesetzt werden können. Damit lässt sich die erfindungsgemäße Bearbeitungsmaschine 1 sehr schnell und kostengünstig auf eine gewünschte Aufspanntechnik umrüsten. Dies ist besonders dann vorteilhaft, wenn häufige Produktwechsel ein Umrüsten der Aufspanntechnik erfordern.

### Bezugszeichenliste

- 1: Bearbeitungsmaschine
- 3: Bearbeitungseinheit
- 5: Werkstück
- 9: Bearbeitungsbereich
- 10: erster Bearbeitungstisch
- 12: erste Spannmittel
- 14: Führungseinrichtung
- 16: Trägerspannmittel
- 20: Werkstückträger
- 22: Werkstückspannmittel
- 24: Führungsmittel
- 30: Werkstückträgermagazin
- 34: Führungseinrichtung
- 100: zweiter Bearbeitungstisch
- 120: zweite Spannmittel
- 140: Führungseinrichtung am zweiten Bearbeitungstisch
- ÜS: Übergabestellung

## Patentansprüche

1. Bearbeitungsmaschine (1) zum Bearbeiten von stabförmigen, plattenförmigen oder dreidimensional geformten Werkstücken, die bevorzugt zumindest abschnittsweise aus Holz, aus Kunststoff oder dergleichen bestehen, mit:
wenigstens einem Werkstückträger (20) zum Aufnehmen der Werkstücke (5), der Werkstückspannmittel (22) zum Fixieren der Werkstücke (5) an dem Werkstückträger (20) aufweist,
und
wenigstens einer Bearbeitungseinheit (3) zum Bearbeiten von Werkstücken (5) in einem Bearbeitungsbereich (9), einem ersten Bearbeitungstisch (10), der eine Führungseinrichtung (14) aufweist, die die Werkstückträger (20) mittels an den Werkstückträgern (20) vorgesehenen Führungsmitteln (24) führend aufnehmen kann, so dass sie zwischen einer Arbeitsposition im Bearbeitungsbereich (9) auf dem Bearbeitungstisch (10) und einer Ruheposition außerhalb des Bearbeitungsbereichs (9) bewegbar sind
**dadurch gekennzeichnet, dass**
der erste Bearbeitungstisch (10) zum Aufnehmen von Werkstücken (5) vorgesehen ist, und mit ersten Spannmitteln (12) zum Fixieren der Werkstücke (5) am ersten Bearbeitungstisch (10) versehen ist,
wobei sich Werkstücke sowohl auf den Werkstückträger (20) als auch direkt auf den Bearbeitungstisch (10) aufspannen lassen.

2. Bearbeitungsmaschine (1) nach Anspruch 1, **dadurch gekennzeichnet, dass** die ersten Spannmittel (12) eingerichtet sind die Werkstückträger (20) an dem ersten Bearbeitungstisch (10) zu fixieren.

3. Bearbeitungsmaschine (1) nach Anspruch 1, **dadurch gekennzeichnet, dass** Trägerspannmittel (16), insbesondere als pneumatische Spanngreifer, am ersten Bearbeitungstisch (10) vorgesehen sind, die eingerichtet sind, die Werkstückträger (20) an dem Bearbeitungstisch (10) zu fixieren.

4. Bearbeitungsmaschine (1) nach einem der vorhergehenden Ansprüche, **dadurch gekennzeichnet, dass** die Nerkstückspannmittel (22) als Vakuumspannelemente oder pneumatische Spanngreifer und/oder die Führungseinrichtung (14) als Linearführung ausgeführt ist.

5. Bearbeitungsmaschine (1) nach einem der vorhergehenden Ansprüche, **dadurch gekennzeichnet, dass** wenigstens ein zweiter Bearbeitungstisch (100) zum Aufnehmen von Werkstücken (5) an der Bearbeitungsmaschine (1) vorgesehen ist, der eine Führungseinrichtung (140) aufweist, die die Werkstückträger (20) mittels an den Werkstückträgern (20) vorgesehenen Führungsmitteln (24) führend aufnehmen kann.

6. Bearbeitungsmaschine (1) nach Anspruch 5, **dadurch gekennzeichnet, dass** die Werkstückträger (20) von mindestens zwei Bearbeitungstischen (10, 100) gleichzeitig führend aufnehmbar ist.

7. Bearbeitungsmaschine (1) nach einem der Ansprüche 5 oder 6, **dadurch gekennzeichnet, dass** die Bearbeitungstische (10, 100) unabhängig voneinander verfahrbar sind.

8. Bearbeitungsmaschine (1) nach einem der Ansprüche 5 oder 6, **dadurch gekennzeichnet, dass** die Bearbeitungstische (10, 100) miteinander gekoppelt synchron verfahrbar sind, wenn ein Werkstückträger (20) sich über beide Bearbeitungstische (10, 100) erstreckend angeordnet ist.

9. Bearbeitungsmaschine (1) nach einem der vorhergehenden Ansprüche, **dadurch gekennzeichnet, dass** ein Werkstückträgermagazin (30) vorgesehen ist, das wenigstens einen Werkstückträger (20) aufnehmen kann.

10. Bearbeitungsmaschine (1) nach Anspruch 9, **dadurch gekennzeichnet, dass** das Werkstückträgermagazin (30) wenigstens eine Führungseinrichtung (34) aufweist, die den Werkstückträger (20) mittels dem an dem Werkstückträger (20) vorgesehenen Führungsmitteln (24) führend aufnehmen kann.

11. Bearbeitungsmaschine (1) nach Anspruch 10, **dadurch gekennzeichnet, dass** die Führungseinrichtung (34) so fluchtend mit der Führungseinrichtung (14) am Bearbeitungstisch (10) in eine Übergabestellung (ÜS) ausrichtbar ist, dass der Werkstückträgern (20) direkt, insbesondere linear vom Führungseingriff mit der Führungseinrichtung (34) am Werkstückträgermagazin (30) in den Führungseingriff mit der Führungseinrichtung (14) am Bearbeitungstisch (10) bewegbar ist.

12. Bearbeitungsmaschine (1) nach Anspruch 11, **dadurch gekennzeichnet, dass** das Ausrichten in die übergabesteilung (ÜS) durch vertikales und/oder horizontales Verfahren der Führungseinrichtung (34) erfolgt .

13. Verfahren zum Werkstückdurchlauf durch eine Bearbeitungsmaschine (1) nach einem der Ansprüche 1 bis 12 mit folgenden Verfahrensschritten:
(a) Vorsehen eines Werkstückträgers (20) derart, dass der Werkstückträger (20) mittels an dem Werkstückträger (20) vorgesehenen Führungsmitteln (24) von der Führungseinrichtung (14) des Bearbeitungstisches (10) führend aufgenommen wird;
(b) Verfahren des Werkstückträgers (20) mit dem Werkstück (5) in den Bearbeitungsbereich (9) der Bearbeitungsmaschine (1);
(c) Bearbeiten eines auf dem Werkstückträger (20) vorgesehenen Werkstücks (5) mittels der Bearbeitungseinheit (3).

14. Verfahren nach Anspruch 13, **dadurch gekennzeichnet, dass** das Werkstück (5) bereits auf den Werkstückträger (20) aufgelegt wird, wenn sich dieser noch im Führungseingriff mit der Führungseinrichtung (34) befindet und anschließend erst der Verfahrensschritt (a) erfolgt.

## Claims

1. Processing machine (1) for processing rod-like, board-like or three-dimensionally shaped workpieces which are preferably in at least one section made of wood, plastic or the like, having:
at least one workpiece carrier (20) for holding the workpieces (5), which has workpiece clamping means (22) for fixing the workpieces (5) to the workpiece carrier (20), and
at least one processing unit (3) for processing workpieces (5) in a processing region (9), a first processing table (10) which has a guide device (14) which can hold the workpiece carriers (20) in guiding relationship using guide means (24) provided on the workpiece carriers (20), so that they are movable between a working position in the processing region (9) on the processing table (10) and a rest position outside the processing region (9),
**characterised in that**
the first processing table (10) is provided for holding workpieces (5), and is equipped with first clamping means (12) for fixing the workpieces (5) to the first processing table (10), wherein workpieces can be mounted both on the workpiece carrier (20) and directly on the processing table (10).

2. Processing machine (1) according to claim 1, **characterised in that** the first clamping means (12) are designed to fix the workpiece carriers (20) to the first processing table (10).

3. Processing machine (1) according to claim 1, **characterised in that** on the first processing table (10) are provided carrier clamping means (16), in particular as pneumatic clamping grippers, which are designed to fix the workpiece carriers (20) to the processing table (10).

4. Processing machine (1) according to any of the preceding claims, **characterised in that** the workpiece clamping means (22) are constructed as vacuum clamping elements or pneumatic clamping grippers and/or the guide device (14) is constructed as a linear guide.

5. Processing machine (1) according to any of the preceding claims, **characterised in that** at least one second processing table (100) is provided for holding workpieces (5) on the processing machine (1), which has a guide device (140) which can hold the workpiece carriers (20) in guiding relationship using guide means (24) provided on the workpiece carriers (20).

6. Processing machine (1) according to claim 5, **characterised in that** the workpiece carriers (20) can be held in guiding relationship by at least two processing tables (10, 100) simultaneously.

7. Processing machine (1) according to either of claims 5 or 6, **characterised in that** the processing tables (10, 100) are movable independently of each other.

8. Processing machine (1) according to either of claims 5 or 6, **characterised in that** the processing tables (10, 100) are coupled together and movable synchronously when a workpiece carrier (20) is arranged to extend over both processing tables (10, 100).

9. Processing machine (1) according to any of the preceding claims, **characterised in that** a workpiece carrier magazine (30) which can hold at least one workpiece carrier (20) is provided.

10. Processing machine (1) according to claim 9, **characterised in that** the workpiece carrier magazine (30) has at least one guide device (34) which can hold the workpiece carrier (20) in guiding relationship using guide means (24) provided on the workpiece carrier (20).

11. Processing machine (1) according to claim 10, **characterised in that** the guide device (34) can be oriented in alignment with the guide device (14) on the processing table (10) into a transfer position (ÜS), **in that** the workpiece carrier (20) is movable directly, in particular linearly, from guiding engagement with the guide device (34) on the workpiece carrier magazine (30), to guiding engagement with the guide device (14) on the processing table (10).

12. Processing machine (1) according to claim 11, **characterised in that** orientation into the transfer position (ÜS) is effected by vertical and/or horizontal movement of the guide device (34).

13. Method for workpiece travel through a processing machine (1) according to any of claims 1 to 12 having the following steps:
(a) provision of a workpiece carrier (20) in such a way that the workpiece carrier (20) is held in guiding relationship by the guide device (14) of the processing table (10) using guide means (24) provided on the workpiece carrier (20);
(b) movement of the workpiece carrier (20) with the workpiece (5) into the processing region (9) of the processing machine (1);
(c) processing of a workpiece (5) provided on the workpiece carrier (20) by means of the processing unit (3).

14. Method according to claim 13, **characterised in that** the workpiece (5) is already laid on the workpiece carrier (20) when the latter is still in guiding engagement with the guide device (34) and only then does step (a) take place.

## Revendications

1. Machine d'usinage (1) pour l'usinage de pièces d'usinage en forme de barres, en forme de plaques ou formées de façon tridimensionnelle, pièces d'usinage qui se composent de préférence au moins partiellement de bois, de matière plastique ou de matériaux analogues, comprenant :
au moins un porte-pièces (20) pour recevoir les pièces d'usinage (5), porte-pièces qui présente des moyens de serrage (22) des pièces d'usinage servant à la fixation des pièces d'usinage (5) sur le porte-pièces (20) et
au moins un ensemble d'usinage (3) pour l'usinage de pièces d'usinage (5) dans une zone d'usinage (9),
une première table d'usinage (10) qui présente un dispositif de guidage (14) qui peut recevoir les porte-pièces (20) en les guidant à l'aide des moyens de guidage (24) prévus sur les porte-pièces (20), de sorte que les porte-pièces peuvent être déplacés entre une position de travail située dans la zone d'usinage (9), sur la table d'usinage (10), et une position de repos située à l'extérieur de la zone d'usinage (9),
**caractérisée en ce que** la première table d'usinage (10) est prévue pour recevoir des pièces d'usinage (5), et est dotée de premiers moyens de serrage (12) servant à fixer les pièces d'usinage (5) sur la première table d'usinage(10), où des pièces d'usinage peuvent être serrées aussi bien sur le porte-pièces (20) que directement sur la table d'usinage (10).

2. Machine d'usinage (1) selon la revendication 1, **caractérisée en ce que** les premiers moyens de serrage (12) sont montés pour fixer les porte-pièces (20) sur la première table d'usinage (10).

3. Machine d'usinage (1) selon la revendication 1, **caractérisée en ce que** des moyens de serrage porteurs (16), en particulier tels que des préhenseurs de serrage pneumatiques, sont prévus sur la première table d'usinage (10), lesquels moyens de serrage porteurs sont montés pour fixer les porte-pièces (20) sur la table d'usinage (10).

4. Machine d'usinage (1) selon l'une quelconque des revendications précédentes, **caractérisée en ce que** les moyens de serrage (22) des pièces d'usinage sont conçus comme des éléments de serrage sous vide ou comme des préhenseurs de serrage pneumatiques et/ou le dispositif de guidage (14) est conçu comme un guidage linéaire.

5. Machine d'usinage (1) selon l'une quelconque des revendications précédentes, **caractérisée en ce qu'**il est prévu, sur la machine d'usinage (1), au moins une deuxième table d'usinage (100) pour recevoir des pièces d'usinage (5), deuxième table d'usinage qui présente un dispositif de guidage (140) qui peut recevoir les porte-pièces (20) en les guidant à l'aide des moyens de guidage (24) prévus sur les porte-pièces (20).

6. Machine d'usinage (1) selon la revendication 5, **caractérisée en ce que** les porte-pièces (20) peuvent être reçus et guidés en même temps, par au moins deux tables d'usinage (10, 100).

7. Machine d'usinage (1) selon l'une des revendications 5 ou 6, **caractérisée en ce que** les tables d'usinage (10, 100) peuvent être déplacées indépendamment l'une de l'autre.

8. Machine d'usinage (1) selon l'une des revendications 5 ou 6, **caractérisée en ce que** les tables d'usinage (10, 100), couplées l'une à l'autre, peuvent être déplacées de façon synchronisée, quand un porte-pièces (20) est disposé en s'étendant sur les deux tables d'usinage (10, 100).

9. Machine d'usinage (1) selon l'une quelconque des revendications précédentes, **caractérisée en ce qu'**il est prévu un magasin de porte-pièces (30) qui peut recevoir au moins un porte-pièces (20).

10. Machine d'usinage (1) selon la revendication 9, **caractérisée en ce que** le magasin de porte-pièces (30) présente au moins un dispositif de guidage (34) qui peut recevoir le porte-pièces (20) en le guidant à l'aide des moyens de guidage (24) prévus sur le porte-pièces (20).

11. Machine d'usinage (1) selon la revendication 10, **caractérisée en ce que** le dispositif de guidage (34) peut être orienté dans une position de transfert (ÜS), en étant aligné sur le dispositif de guidage (14) placé sur la table d'usinage (10), de manière telle que le porte-pièces (20) puisse être déplacé directement, en particulier de façon linéaire, passant de l'engagement de guidage avec le dispositif de guidage (34) placé au niveau du magasin de porte-pièces (30), à l'engagement de guidage avec le dispositif de guidage (14) placé sur la table d'usinage (10).

12. Machine d'usinage (1) selon la revendication 11, **caractérisée en ce que** l'orientation en position de transfert (ÜS) se produit par un déplacement vertical et/ou horizontal du dispositif de guidage (34).

13. Procédé pour le passage de pièces d'usinage traversant une machine d'usinage (1) selon l'une quelconque des revendications 1 à 12, comprenant les étapes de procédé suivantes consistant :
(a) à prévoir un porte-pièces (20), de manière telle que le porte-pièces (20) soit reçu en étant guidé à l'aide des moyens de guidage (24) du dispositif de guidage (14) de la table d'usinage (10), lesdits moyens de guidage étant prévus sur le porte-pièces (20) ;
(b) à déplacer dans la zone d'usinage (9) de la machine d'usinage (1), le porte-pièces (20) comprenant la pièce d'usinage (5) ;
(c) à usiner au moyen de l'ensemble d'usinage (3), une pièce d'usinage (5) prévue sur le porte-pièces (20).

14. Procédé selon la revendication 13, **caractérisé en ce que** la pièce d'usinage (5) est déjà placée sur le porte-pièces (20), lorsque celui-ci se trouve encore en engagement de guidage avec le dispositif de guidage (34), l'étape de procédé (a) intervenant seulement ensuite.
